(19) Europäisches Patentamt
European Patent Office
Office européen des brevets

(11) Veröffentlichungsnummer: **0 005 447**
**B1**

# (12) EUROPÄISCHE PATENTSCHRIFT

(45) Veröffentlichungstag der Patentschrift: **05.05.82**

(51) Int. Cl.³: **C 07 F 9/48,** C 08 K 5/53, C 08 L 23/00

(21) Anmeldenummer: **79101079.6**

(22) Anmeldetag: **09.04.79**

## (54) Orthoalkylierte Phenylphosphonite, Verfahren zu ihrer Herstellung und stabilisierte Massen.

(30) Priorität: **20.04.78 US 898270**

(43) Veröffentlichungstag der Anmeldung: **28.11.79 Patentblatt 79/24**

(45) Bekanntmachung des Hinweises auf die Patenterteilung: **05.05.82 Patentblatt 82/18**

(84) Benannte Vertragsstaaten: **DE FR GB IT**

(56) Entgegenhaltungen:
**DE-A-2 256 783**
**US-A-3 297 631**
**US-A-3 809 676**
**US-A-3 825 629**
**US-A-4 077 940**
**US-A-4 143 028**

(73) Patentinhaber: **CIBA-GEIGY AG, Patentabteilung Postfach, CH-4002 Basel (CH)**

(72) Erfinder: **Spivack, John D., 1 Blue Jay Street, Spring Valley New York 10977 (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Orthoalkylierte Phenylphosphonite, Verfahren zu ihrer Herstellung und stabilisierte Massen

Die vorliegende Erfindung betrifft gehinderte orthoalkylierte Phenylphosphonite, welche organische Materialien, insbesondere Kunststoffe, Polymere und Harze sowie mineralische und synthetische Flüssigkeiten und Öle wirksam stabilisieren.

Organische Polymermaterialien wie Kunststoffe und Harze sowie Schmier- und Mineralöl unterliegen thermischem, oxydativem und Lichtabbau. Eine grosse Anzahl Stabilisatoren zur Stabilisierung verschiedener Substrate sind dem Stand der Technik bekannt. Deren Wirksamkeit ändert sich je nach den Ursachen des Abbaus und dem stabilisierten Substrat. Zahlreiche Stabilisatoren, die über längere Zeit hochwirksame Antioxydantien darstellen, sind bekanntlich verhältnismässig schlechte Stabilisatoren bei der Verarbeitung, wo eine Stabilisierung des Substrats gegen thermischen Abbau für kurze Zeit, aber bei verhältnismässig hoher Temperatur erforderlich ist. Viele Stabilisatoren sind mit den Substraten mehr oder weniger unverträglich, was während der Lebensdauer des Produkts Probleme stellt und die Wirksamkeit des Stabilisators verringert. Teilweise sind die Stabilisatoren entweder zu flüchtig oder thermisch oder hydrolytisch zu instabil, um als gewerbliche Stabilisatoren praktisch verwendbar zu sein.

Ausgehend von sterisch gehinderten Phenolen erhaltene Phosphonite wie beispielsweise Diphenylen-bis-phosphonite sind in der US-Patentschrift 3 825 629 als Stabilisatoren für organische Materialien beschrieben.

In den US-Patentschriften 3 809 676 und 3 978 020 werden gattungsmässig einige Phosphonite bekanntgemacht, die denen der vorliegenden Erfindung verwandte Konstitutionen aufweisen, jedoch wird die spezifische Gattung der erfindungsgemässen Phosphonite weder als Beispiel angegeben noch speziell erwähnt. Diese Veröffentlichungen beziehen sich auf thermisch stabile, ein Phosphonit oder Phosphinit in Kombination mit einem Barium-, Calcium- oder Ceralkanoat oder -carbonat enthaltende, flammhemmende Polycarbonate bzw. auf thermisch stabile, ein Phosphonit und eine Epoxidverbindung enthaltende Polycarbonate.

Die vorliegenden Phosphonite sind als Stabilisatoren, insbesondere bezüglich ihrer Lichtschutzwirkung, wirksamer als die bekannten Phosphonite.

Gegenstand dieser Erfindung sind hydrolysestabile, ortho-alkylierte Phenylphosphonite, ein Verfahren zur ihrer Herstellung sowie mit diesen Phosphoniten stabilisierte, sowohl polymere als auch nichtpolymere organische Materialien.

Die Verbindungen entsprechen der Formel I

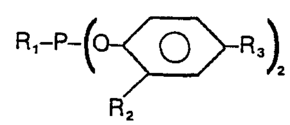

(I),

worin $R_1$ $C_1$–$C_{18}$-Alkyl, Phenyl oder mit 1 bis 3 $C_1$–$C_8$-Alkylgruppen substituiertes Phenyl bedeutet, $R_2$ $C_4$–$C_{18}$-tert.-Alkyl, Benzyl, α-Methylbenzyl oder α,α-Dimethylbenzyl ist, und $R_3$ Wasserstoff, $C_1$–$C_{18}$-Alkyl, Benzyl, α-Methylbenzyl oder α,α-Dimethylbenzyl bedeutet.

$R_1$ bedeutet als $C_1$–$C_{18}$-Alkyl z.B. Methyl, n-Butyl, n-Octyl, n-Decyl, n-Dodecyl oder n-Octadecyl. Ist $R_1$ Phenyl, so kann es durch 1 bis 3 $C_1$–$C_8$-Alkylgruppen substituiert sein. Solche substituierten Phenylgruppen sind z.B. o-Tolyl, m-Tolyl, p-Tolyl, o-Xylyl, m-Xylyl, p-Xylyl, Mesityl, o-Cumyl, p-tert.-Butylphenyl, 2,4-Di-tert-butylphenyl, 2,4,6-Tri-tert.-butylphenyl oder 2,4-Di-tert.-octylphenyl.

Bevorzugt bedeute $R_1$ Phenyl oder durch 1 bis 3 $C_1$–$C_4$-Alkylgruppen substituiertes Phenyl.

Insbesondere ist $R_1$ Phenyl.

$R_2$ kann $C_4$–$C_{18}$-tert.-Alkyl bedeuten, wie tert. Butyl, tert. Amyl, tert. Octyl oder tert. Octadecyl. Bevorzugt sind tert. Alkylgruppen mit 4–8 C-Atomen.

Ferner bedeutet $R_2$ bevorzugt auch α-Methylbenzyl oder α,α-Dimethylbenzyl.

$R_3$ kann als $C_1$–$C_{18}$-Alkyl beispielsweise Methyl, i-Propyl, tert.-Butyl, tert.-Amyl, n-Hexyl, tert.-Octyl, tert.-Dodecyl oder n-Octadecyl sein. Bevorzugt ist $R_3$ Wasserstoff, $C_1$–$C_8$-Alkyl, α-Methylbenzyl oder α,α-Dimethylbenzyl, besonders bevorzugt jedoch $C_4$–$C_8$-tert.-Alkyl.

Die Verbindungen der Formel I werden auf an sich bekannte Weise, z.B. gemäss dem folgenden Formelschema hergestellt:

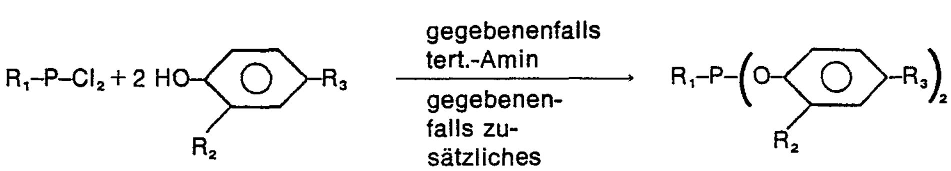


(II) (III)

Die Verwendung von tertiären Aminen lässt sich vermeiden, wenn man die Phenole der Formel III durch Umsetzung mit stöchiometrischen Mengen Alkalimetall oder Alkalihydroxyd in das Phenolatanion umwandelt und anschliessend das Anion entsprechend mit II umsetzt.

Aromatischen Kohlenwasserstoffen wie Benzol, Toluol oder Xylol sind als Lösungsmittel für die Synthese geeignet.

Die Reaktionsstufen lassen sich zweckmässig unter Verwendung tertiärer Amine wie Triäthylamin, Pyridin, N,N-dimethylanilin durchführen, jedoch können auch andere Säureacceptoren verwendet werden.

Die Anwendung überschüssigen tertiären Amins über die als Protonakzeptor erforderliche Menge erhöht die Reaktionsgeschwindigkeit in den Synthesestufen erheblich. Die ist besonders wichtig, wenn das Phenol III stark gehindert ist.

Die Reaktionstemperaturen können von unterhalb Raumtemperatur bis zur Rückflusstemperatur das vorhandene Lösungsmittel schwanken. Wird kein Lösungsmittel verwendet, so sind Temperaturen bis etwa 150°C zweckmässig.

Die Ausgangsstoffe der Formeln II und III sind bekannt, zum Teil handelsüblich oder können leicht nach bekannten Methoden hergestellt werden.

Die erfindungsgemässen Verbindungen sind wirksame Lichtschutzmittel und/oder Antioxydantien für eine lange Reihe organischer Polymerer. Polymere, die stabilisiert werden können, schliessen ein:

1. Sich von Mono- oder Diolefinen ableitende Polymere, z.B. gegebenenfalls vernetztes Polyäthylen sowie Polypropylen, Polyisobutylen, Polymethylbuten-1, Polymethylpenten-1, Polyisopren und Polybutadien.

2. Gemische der unter 1) angegebenen Homopolymeren, beispielsweise Gemische aus Polypropylen und Polyäthylen, Polypropylen und Polybuten-1 sowie Polypropylen und Polyisobutylen.

3. Copolymere der Monomeren, auf denen die unter 1) angegebenen Homopolymeren basieren, beispielsweise Äthylen/Propylencopolymere, Propylen/Buten-1-copolymere, Propylen/Isobutylencopolymere, Äthylen/Buten-1-copolymere sowie Terpolymere aus Äthylen und Propylen mit einem Dien, zum Beispiel Hexadien, Dicyclopentadien oder Äthylidennorbornen, und Copolymere aus α-Olefinen, z.B. Äthylen mit Acryl- oder Methacrylsäure.

4. Polystyrol.

5. Copolymere von Styrol und α-Methylstyrol, beispielsweise Styrol/Butadiencopolymere, Styrol/Acrylnitrilcopolymere, Styrol/Acrylnitril/Methacrylatcopolymere, mit Acrylesterpolymeren zwecks Schlagzähigkeit modifizierte Styrol/Acrylnitrilcopolymere sowie Blockcopolymere, z.B. Styrol/Butadien/Styrolblockcopolymere.

6. Pfropfcopolymere von Styrol, beispielsweise das Pfropfpolymer von Styrol auf Polybutadien, das Pfropfpolymer von Styrol mit Acrylnitril auf Polybutadien sowie deren Gemische mit den unter 5) angegebenen, allgemein als Acrylnitril/Butadien/Styrol oder ABS-kunststoffe bezeichneten Copolymeren.

7. Halogenhaltige Vinylpolymere, beispielsweise Polyvinylchlorid, Polyvinylidenchlorid, Polyvinylfluorid, Polychloropren, chlorierte Kautschuke, Vinylchlorid/Vinylidenchloridcopolymere, Vinylchlorid/Vinylacetatcopolymere und Vinylidenchlorid/Vinylacetatcopolymere.

8. Sich von α,β-ungesättigten Säuren und deren Derivaten ableitende Polymere, Polyacrylate und Polymethacrylate, Polyacrylamide und Polyacrylnitril.

9. Sich von ungesättigten Alkoholen und Aminen und deren Acylderivaten oder Acetalen ableitende Polymere, beispielsweise Polyvinylalkohol, Polyvinylacetat, Polyvinylstearat, Polyvinylbenzoat, Polyvinylmaleinat, Polyvinylbutyral, Polyallylphthalat, Polyallylmelamin sowie deren Copolymere mit anderen Vinylverbindungen, zum Beispiel Äthylen/Vinylacetatcopolymere.

10. Sich von Epoxiden ableitende Homopolymere und Copolymere, beispielsweise Polyäthylenoxyd oder die sich von Bis-glycidyläthern ableitenden Polymeren.

11. Polyacetale, beispielsweise Polyoxymethylen sowie solche Polyoxymethylene, die als Comonomer Äthylenoxyd enthalten.

12. Polyalkylenoxyde, beispielsweise Polyoxyäthylen, Polypropylenoxyd oder Polyisobutylenoxyd.

13. Polyphenylenoxyde.

14. Polyurethane und Polyharnstoffe.

15. Polycarbonate.

16. Polysulfone.

17. Sich von Diaminen und Dicarbonsäuren und/oder Aminocarbonsäuren oder den entsprechenden Lactamen ableitende Polyamide und Copolyamide, beispielsweise Polyamid-6, Polyamid-6/6, Polyamid-6/10, Polyamid-11, Polyamid-12 und Poly-m-phenylen-isophthalamid.

18. Sich von Dicarbonsäuren und Dialkoholen und/oder von Hydroxycarbonsäuren oder den entsprechenden Lactonen ableitende Polyester, beispielsweise Polyäthylenglycolterephthalat und Poly-1,4-dimethylol-cyclohexanterephthalat.

19. Sich einerseits von Aldehyden und andererseits von Phenolen, Harnstoffen und Melamin ableitende vernetzte Polymere, beispielsweise Phenol/Formaldehyd-, Harnstoff/Formaldehyd- und Melamin/Formaldehydharze.

20. Alkydharze, beispielsweise Glycerin/Phthalsäureharze und deren Gemische mit Melamin/Formaldehydharzen.

21. Sich von Copolyestern gesättigter und ungesättigter Dicarbonsäuren mit mehrwertigen Alkoholen sowie Vinylverbindungen als Vernetzungsmittel ableitende ungesättigte Polyesterharze sowie deren halogenhaltige, flammwidrige Modifikationen.

22. Natürlich vorkommende Polymere, beispielsweise Cellulose, Kautschuk sowie deren chemischmodifizierte homologe Derivate, zum Beispiel Celluloseacetate, Cellulosepropionate und Cellulosebutyrate sowie Celluloseäther, z.B. Methylcellulose.

Besonders wirksam sind die erfindungsgemässen Verbindungen bei der Stabilisierung organischer Materialien wie Kunststoffe, Polymere und Harze, sowie mineralischer und synthetischer Flüssigkeiten wie Schmieröl, Umlauföle u.dgl.

Die erfindungsgemässen Verbindungen sind besonders als Stabilisatoren nützlich, speziell zum Schutz von Polyolefinen, beispielsweise Polyäthylen, Polypropylen, Polyisobutylen, Polybuten-1, Polypenten-1, Poly-3-methylbuten-1, Poly-4-methylpenten-1, sowie verschiedene Äthylen/Propylencopolymere u.dgl.

Weitere Substrate, in denen die erfindungsgemässen Verbindungen besonders nützlich sind,

umfassen Polystyrol einschliesslich schlagzähem Polystyrol, ABS-Harz, Styrolbutadiengummi, Polyisopren sowie Naturkautschuk, Polyester einschliesslich Polyäthylenterephthalat und Polybutylenterephthalat einschliesslich Copolymere. Ebenfalls werden Polyurethane, Polycarbonate, Polyamide wie Nylon-6, -6/6 ud.dgl. sowie Copolyamide und Polysulfone stabilisiert.

Die erfindungsgemässen Verbindungen können für sich als einziger Stabilisator angewandt werden, der entweder hauptsächlich als Antioxydans oder als Lichtstabilisator funktioniert oder diese beiden Funktionen in sich vereint. Die Stabilisatoren können zusammen mit phenolischen Antioxydantien, Gleitmitteln wie Kalziumstearat, Pigmenten, Färbemitteln oder Farbstoffen, UV-Absorptionsmitteln, Lichtstabilisatoren wie gehinderten Aminen, Metalldesaktivatoren, Talkum und anderen Füllstoffen und dergleichen verwendet werden.

Im allgemeinen werden die erfindungsgemässen Stabilisatoren in Mengen von etwa 0,01 bis etwa 5 Gew.-% der stabilisierten Masse eingesetzt, doch wird dies nach dem Substrat und der Anwendung jeweils variieren. Ein vorteilhafter Bereich liegt bei etwa 0,05 bis etwa 2% und insbesondere bei 0,1 bis etwa 1%.

Erfindungsgemässe Verbindungen stabilisieren Polymere, insbesondere während der Verarbeitung bei hoher Temperatur und geben verhältnismässig geringe Farbänderung, obwohl das Polymer mehrere Extrusionen durchlaufen kann. Polymere, bei denen diese Eigenschaft besonders ausgesprochen ist, sind Polypropylen, Polyäthylen, Styrolkörper wie ABS, Polyäthylen- und Polybutylenterephthalate, Polycarbonate, Naturkautschuk und Synthesekautschuk wie SBR. Während zahlreiche Verbindungen, die als Verarbeitungsstabilisatoren verwendet wurden, nur in Gegenwart von phenolischen Antioxydantien usw. als Verarbeitungsstabilisatoren für Polyolefine wirksam sind, sind erfindungsgemässe Verbindungen in Abwesenheit phenolischer Antioxydantien wirksam.

Bei zahlreichen erfindungsgemässen Verbindungen sind die verfahrensstabilisierenden Eigenschaften mit der Fähigkeit kombiniert, dem Polymer Lichtstabilität zu verleihen. Dies ist besonders bei Polymerfasern wichtig, wo die Verarbeitungstemperaturen am höchsten liegen und die Stabilität gegen aktinisches Licht ein überragendes Erfordernis darstellt.

Die Stabilisatoren der Formel I lassen sich leicht nach herkömmlichen Methoden in die organischen Polymere einarbeiten, und zwar während irgendeiner zweckmässigen Stufe vor der Fertigung von Formkörpern. Beispielsweise kann man den Stabilisator mit dem Polymer als trockenes Pulver vermischen oder eine Suspension oder Emulsion des Stabilisators mit einer Lösung, Suspension oder Emulsion des Polymeren vermischen. Gegebenenfalls können die erfindungsgemässen stabilisierten Polmermassen auch verschiedene herkömmliche Zusatzstoffe wie die folgenden enthalten:

1. Antioxydantien

1.1 Einfache 2,6-Dialkylphenole, wie beispielsweise
2,6-Di-tert.-butyl-4-methylphenol,
2-tert.-Butyl-4,6-dimethylphenol,
2,6-Di-tert.-butyl-4-methoxymethylphenol und
2,6-Dioctadecyl-4-methylphenol.

1.2 Derivate von alkylierten Hydrochinonen, wie beispielsweise
2,5-Di-tert.-butyl-hydrochinon,
2,5-Di-tert.-amylhydrochinon,
2,6-Di-tert.-butyl-hydrochinon,
2,5-Di-tert.-butyl-4-hydroxy-anisol,
3,5-Di-tert.-butyl-4-hydroxy-anisol,
Tris-(3,5-di-tert.-butyl-4-hydroxyphenyl)-phosphit,
3,5-Di-tert.-butyl-4-hydroxyphenylstearat und
Bis-(3,5-di-tert.-butyl-4-hydroxyphenyl)-adipat.

1.3 Hydroxylierte Thiodiphenyläther, wie beispielsweise
2,2′-Thio-bis-(6-tert.-butyl-4-methylphenol),
2,2′-Thio-bis-(4-octylphenol),
4,4′-Thio-bis-(6-tert.-butyl-3-methylphenol),
4,4′-Thio-bis-(3,6-di-sek.-amylphenol),
4,4′-Thio-bis-(6-tert.-butyl-2-methylphenol) und
4,4′-Bis-(2,6-dimethyl-4-hydroxy-phenyl)-disulfid.

1.4 Alkyliden-bisphenole, wie beispielsweise
2,2′-Methylen-bis-(6-tert.-butyl-4-methylphenol),
2,2′-Methylen-bis-(6-tert.-butyl-4-äthylphenol),
4,4′-Methylen-bis-(6-tert.-butyl-2-methylphenol)-
4,4′-Methylen-bis-(2,6-di-tert.-butylphenol),
2,6-Di-(3-tert.-butyl-5-methyl-2-hydroxybenzyl)-4-methylphenol,
2,2′-Methylen-bis-[4-methyl-6-(α-methylcyclohexyl)-phenol],
1,1-Bis-(3,5-dimethyl-2-hydroxyphenyl)-butan,
1,1-Bis-(5-tert.-butyl-4-hydroxy-2-methylphenyl)-butan,
2,2-Bis-(3,5-di-tert.-butyl-4-hydroxyphenyl)-propan,
1,1,3-Tris-(5-tert.-butyl-4-hydroxy-2-methylphenyl)-butan,
2,2-Bis-(5-tert.-butyl-4-hydroxy-2-methylphenyl)-4-n-dodecylmercaptobutan,
1,1,5,5-Tetra-(5-tert.-butyl-4-hydroxy-2-methylphenyl)-pentan und
Äthylenglykol-bis-[3,3-bis-(3-tert.-butyl-4-hydroxyphenyl)-butyrat].

1.5 O-, N- und S-Benzylverbindungen, wie beispielsweise
3,5,3',5'-Tetra-tert.-butyl-4,4'-dihydroxydibenzyläther,
Octadecyl-4-hydroxy-3,5-dimethylbenzylmercaptoacetat,
Tris-(3,5-di-tert.-butyl-4-hydroxybenzyl)-amin und
Bis-(4-tert.-butyl-3-hydroxy-2,6-dimethylbenzyl)-dithioterephthalat.

1.6 Hydroxybenzylierte Malonate, wie beispielsweise
Dioctadecyl-2,2-bis-(3,5-di-tert.-butyl-2-hydroxybenzyl)-malonat,
Dioctadecyl-2-(3-tert.-butyl-4-hydroxy-5-methylbenzyl)-malonat,
Di-dodecylmercapto-äthyl-2,2-bis-(3,5-di-tert.-butyl-4-hydroxybenzyl)-malonat und
Di-[4-(1,1,3,3-tetramethylbutyl)-phenyl]-2,2-bis-(3,5-di-tert.-butyl-4-hydroxybenzyl)-malonat.

1.7 Hydroxybenzyl-aromatische Verbindungen, wie beispielsweise
1,3,5-Tri-(3,5-di-tert.-butyl-4-hydroxybenzyl)-2,4,6-trimethylbenzol,
1,4-Di-(3,5-di-tert.-butyl-4-hydroxybenzyl)-2,3,5,6-tetramethylbenzol und
2,4,6-Tri-(3,5-di-tert.-butyl-4-hydroxybenzyl)-phenol.

1,8 s-Triazinverbindungen, wie beispielsweise
2,4-Bis-octylmercapto-6-(3,5-di-tert.-butyl-4-hydroxy-anilino)-s-triazin,
2-Octylmercapto-4,6-bis-(3,5-di-tert.-butyl-4-hydroxy-anilino)-s-triazin,
2-Octylmercapto-4,6-bis-(3,5-di-tert.-butyl-4-hydroxyphenoxy)-s-triazin,
2,4,6-Tris-(3,5-di-tert.-butyl-4-hydroxyphenoxy)-s-triazin,
2,4,6-Tris-(3,5-di-tert.-butyl-4-hydroxyphenyläthyl)-s-triazin und
1,3,5-Tris-(3,5-di-tert.-butyl-4-hydroxybenzyl)-isocyanurat.

1.9 Amide der β-(3,5-Di-tert.-butyl-4-hydroxyphenyl)-propionsäure, wie beispielsweise
1,3,5-Tris-(3,5-di-tert.-butyl-4-hydroxyphenyl-propionyl)-hexahydro-s-triazin und
N,N'-Di-(3,5-di-tert.-butyl-4-hydroxyphenyl-propionyl)-hexamethylendiamin und
N,N'-Bis-β-(3,5-di-t-butyl-4-hydroxyphenyl)-propionylhydrazin.

1.10 Ester der β-(3,5-Di-tert.-butyl-4-hydroxyphenyl)-propionsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thiapentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan.

1.11 Ester der β-(5-tert.-Butyl-4-hydroxy-3-methylphenyl)-propionsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thiapentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan.

1,12 Ester der 3,5-Di-tert.-butyl-4-hydroxyphenylessigsäure mit einwertigen oder mehrwertigen Alkoholen, wie beispielsweise mit Methanol, Äthanol, Octadecanol, 1,6-Hexandiol, 1,9-Nonandiol, Äthylenglykol, 1,2-Propandiol, Diäthylenglykol, Thiodiäthylenglykol, Neopentylglykol, Pentaerythrit, 3-Thia-undecanol, 3-Thiapentadecanol, Trimethylhexandiol, Trimethyloläthan, Trimethylolpropan, Tris-hydroxyäthylisocyanurat und 4-Hydroxymethyl-1-phospha-2,6,7-trioxabicyclo[2,2,2]octan, insbesondere der Tetrakisester des Pentaerythrits.

1,13 Benzylphosphonate, wie beispielsweise
Dimethyl-3,5-di-tert.-butyl-4-hydroxybenzylphosphonat,
Diäthyl-3,5-di-tert.-butyl-4-hydroxybenzylphosphonat,
Dioctadecyl-3,5-di-tert.-butyl-4-hydroxybenzylphosphonat und
Dioctadecyl-5-tert.-butyl-4-hydroxy-3-methylbenzylphosphonat.

Die folgenden seien als Beispiele für weitere Zusatzstoffe genannt, die zusammen mit dem erfindungsgemässen Stabilisator und dem Antioxydans verwendet werden können:

1. Aminoarylderivate, z.B.
Phenyl-1-naphthylamin,
Phenyl-2-naphthylamin,
N,N'-Diphenyl-p-phenylendiamin,
N,N'-Di-2-naphthyl-p-phenylendiamin,
N,N'-Di-2-naphthyl-p-phenylendiamin,
N,N'-Di-sek.-butyl-p-phenylendiamin,
6-Äthoxy-2,2,4-trimethyl-1,2-dihydrochinolin,
6-Dodecyl-2,2,4-trimethyl-1,2-dihydrochinolin,
Mono- und Dioctyliminodibenzyl und
polymerisiertes 2,2,4-Trimethyl-1,2-dihydrochinolin.

Octyliertes Diphenylamin,
nonyliertes Diphenylamin,
N-Phenyl-N'-cyclohexyl-p-phenylendiamin,
N-Phenyl-N'-isopropyl-p-phenylendiamin,
N,N'-Di-sek.-octyl-p-phenylendiamin,
N-Phenyl-N'-sek.-octyl-p-phenylendiamin,
N,N'-Di-(1,4-dimethylpentyl)-p-phenylendiamin,
N,N'-Dimethyl-N,N'-di-(sek.-octyl)-p-phenylendiamin,

2,6-Dimethyl-4-methoxyanilin,
4-Äthoxy-N-sek.-butylanilin,
das Diphenylamin/Acetonkondensationsprodukt,
Aldol-1-naphthylamin und Phenothiazin.

Bei der Verwendung der obigen Antioxydantien sind Verfärbungseffekte zu berücksichtigen.

2. UV-Absorber und Lichtstabilisierungsmittel
2.1 2-(2'-Hydroxyphenyl)-benztriazole, z.B. das
5'-Methyl-3',5'-Di-tert.-butyl-,
5'-tert.-Butyl-, 5'-(1,1,3,3-Tetramethylbutyl)-,
5-Chlor-3',5'di-tert.-butyl-,
5-Chlor-3'-tert.-butyl-5'-methyl,
3'-sek.-Butyl-5'-tert.-butyl-,
3'-α-Methylbenzyl-5'-methyl-,
3'-α-Methylbenzyl-5'-methyl-5-chlor-,
4'-Hydroxy-, 4'-Methoxy-, 4'-Octoxy-,
3',5'-Di-tert.-amyl-,
3'-Methyl-5'-carbomethoxyäthyl- und
5-Chlor-3',5'-di-tert.-amyl-derivat.

2.2 2,4-Bis-(2'-hydroxyphenyl)-6-alkyl-s-triazine, z.B. das 6-Äthyl-, 6-Heptadecyl- oder 6-Undecylderivat.

2.3 2-Hydroxybenzophenone, z.B. das 4-Hydroxy-, 4-Methoxy-, 4-Octoxy-, 4-Decyloxy-, 4-Dodecyloxy-, 4-Benzyloxy-, 4,2', 4'-Trihydroxy- oder 2'-Hydroxy-4,4'-dimethoxy-derivat.

2.4 1,3-Bis-(2'-hydroxybenzoyl)-benzole, z.B.
1,3-Bis-(2'-hydroxy-4'-hexyloxy-benzoyl)-benzol,
1,3-Bis-(2'-hydroxy-4'-octyloxy-benzoyl)-benzol oder
1,3-Bis-(2'-hydroxy-4'-dodecyloxy-benzoyl)-benzol.

2.5 Ester gegebenenfalls substituierter Benzoesäure, z.B.
Phenylsalicylat, Octylphenylsalicylat,
Dibenzoylresorcin,
Bis-(4-tert.-butylbenzoyl)-resorcin,
Benzoylresorcin,
3,5-Di-tert.-butyl-4-hydroxybenzoesäure-2,4-di-tert.-butylphenylester oder
-octadecylester oder
-2-methyl-4,6-di-tert.-butylester.

2.6 Acrylate, z.B.
α-Cyan-β,β-diphenylacrylsäureäthylester oder
-isooctylester,
α-Carbomethoxy-zimtsäuremethylester,
α-Cyan-β-methyl-p-methoxy-zimtsäuremethylester oder -butylester oder
N-(β-Carbomethoxyvinyl)-2-methylindolin.

2.7 Sterisch gehinderte Amine, z.B.
4-Benzoyl-2,2,6,6-tetramethylpiperidin,
4-Stearyloxy-2,2,6,6-tetramethylpiperidin,
Bis-(2,2,6,6-tetramethylpiperidyl)-sebacin oder
3-n-Octyl-7,7,9,9-tetramethyl-1,3,8-triaza-spiro[4,5]decan-2,4-dion.

2.8 Oxalicsäurediamide, z.B.
4,4'-Di-octyloxy-oxanilid,
2,2'-Di-octyloxy-5,5'-di-tert.-butyl-oxanilid,
2,2'-Di-dodecyloxy-5,5'-di-tert.-butyl-oxanilid,
2-Äthoxy-2'-äthyl-oxanilid,
N,N'-Bis-(3-dimethylaminopropyl)-oxalamid,
2-Äthoxy-5-tert.-butyl-2'-äthyl-oxanilid und dessen Gemisch mit
2-Äthoxy-2'-äthyl-5,4'-di-tert.-butyl-oxanilid oder Gemische von ortho- und paramethoxy- sowie o- und p-äthoxy-disubstituierten Oxaniliden.

3. Metalldesaktivatoren, z.B.
Oxanilid, Isophthalsäuredihydrazid,
Sebacinsäure-bis-phenylhydrazid,
Bis-benzyliden-oxalsäure-dihydrazid,
N,N'-Diacetal-adipinsäure-dihydrazid,
N,N'-Bis-salicyloyl-oxalsäure-dihydrazid,
N,N'-Bis-salicyloyl-hydrazin,
N,N'-Bis-(3,5-di-tert.-butyl-4-hydroxyphenyl-propionyl)-hydrazin,
N-Salicyloyl-N'-salicylalhydrazin,
3-Salicyloyl-amino-1,2,4-triazol oder
N,N'-Bis-salicyloyl-thiopropionsäure-dihydrazid.

4. Basische Co-stabilisatoren, z.B. Alkalisalze und Erdalkalisalze höherer Fettsäuren, beispielsweise Ca-stearat, Zn-stearat, Mg-behenat, Na-ricinoleat oder K-palmitat.

5. Keimbildungsmittel, z.B. 4-tert.-Butylbenzoesäure, Adipinsäure oder Diphenylessigsäure.

6. Phosphite, wie beispielsweise Triphenylphosphit, Diphenylalkylphosphite, Phenyldialkylphosphite, Tri-(nonylphenyl)-phosphit, Trilaurylphosphit, Trioctadecylphosphit, 3,9-Isodecyloxy-2,4,8,10-tetraoxa-3,9-diphosphaspiro[5,5]undecan und Tri-(4-hydroxy-3,5-di-tert.-butylphenyl)-phosphit.

Als weitere Zusatzstoffe, die in die stabilisierten Massen eingearbeitet werden können, kommen Thiosynergisten wie Dilauryl-thiodiproprionat oder Distearyl-thiodipropionat, Gleitmittel wie Stearylalkohol, Füllstoffe, Russ, Asbest, Kaolin, Talkum, Glasfasern, Pigmente, optische Aufheller, Flammschutzmittel und Antistatika in Frage.

Die nachfolgenden Beispiele sind lediglich für Erläuterungszwecke angegeben und sollen in gar keiner Weise die Art und den Rahmen der vorliegenden Erfindung einschränken.

Beispiel 1
0,0'-Bis-(2,4-di-tert.-butylphenyl
phenylphosphonit

Eine Lösung von 42,4 g 2,4-Di-tert.-butylphenol in 101 g Triäthylamin wurden im Verlauf von 15 Minuten mit 17,9 g Dichlorphenylphosphin versetzt. Die Reaktionsmasse wurde dann 6 Stunden auf 65–70°C erhitzt. Nach Abkühlen auf Raumtemperatur wurde das Gemisch mit 50 ml Benzol verdünnt und dann unter heftigem Rühren in 70 g konzentrierter Salzsäure und 200 g Eis gegossen. Nach Schmelzen des Eises wird die abgetrennte wässrige Schicht mit Toluol extrahiert. Die vereinigten Toluolphasen wäscht man nacheinander mit Wasser, gesättigter Natriumbicarbonatlösung und Wasser und trocknet dann über wasserfreiem Natriumsulfat. Nach Entfernung des Toluols im Vakuum wird der isolierte Rückstand aus 250 ml Acetonitril umkristallisiert, was weisse, bei 90–93°C schmelzende Kristalle liefert.

Beispiel 2
0,0'-Bis-(2,4-di-tert.-octylphenyl) phenylphosphonit

Das oben erwähnte Produkt erhält man, wenn man 2,4-Di-tert.-butylphenol mit 2,4-Di-tert.-octylphenol ersetzt und sonst in der im Beispiel 1 erwähnten Weise vorgeht. Das Produkt schmilzt bei 80–83°C.

Beispiele 3–8

Analog erhält man folgende Produkte:

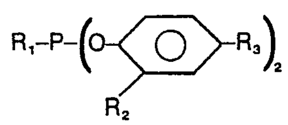

| Beispiel | $R_1$ | $R_2$ | $R_3$ |
|---|---|---|---|
| 3 | Phenyl | tert.-Octyl | Methyl |
| 4 | Methyl | tert.-Octyl | tert.-Octyl |
| 5 | n-$C_{12}H_{25}$ | tert.-Butyl | tert.-Butyl |
| 6 | n-$C_{18}H_{37}$ | tert.-Butyl | tert.-Butyl |
| 7 | Phenyl | tert.-Butyl | H |
| 8 | Phenyl | α,α-Dimethylbenzyl | α,α-Dimethylbenzyl |

tert.-Octyl = 1,1,3,3-Tetramethylbutyl

Beispiel 9
Stabilität von Polypropylen bei der Verarbeitung bei 260°C

Die Grundrezeptur enthält 100 Teile unstabilisiertes Polypropylen (Profax 6801, Hercules) mit 0,10 Teilen Kalziumstearat. Die zu prüfenden Stabilisatoren werden aus Lösungen in Methylenchlorid in das Polypropylen unter Zuhilfenahme von Lösungsmitteln eingemischt. Nach Entfernung des Lösungsmittels durch Eindampfen bei vermindertem Druck extrudiert man das stabilisierte Polymer bei 100 U.p.M. aus einem Extruder von 2,54 cm Durchmesser und den folgenden Extruderbedingungen:

| Stelle im Extruder | Temperatur °C |
|---|---|
| Zylinder 1 | 232 |
| Zylinder 2 | 246 |
| Zylinder 3 | 260 |
| Düse 1 | 260 |
| Düse 2 | 260 |

Während der Extrusion wird der Innendruck im Extruder mittels eines Druckgebers bestimmt. Nach der ersten, dritten und fünften Extrusion wird jeweils das Kunstharzgranulat bei 193°C zu 3,2 mm dicken Plättchen verpresst, und die Vergilbungszahl (YI) der Proben wird gemäss ASTM D1925–63T bestimmt. Niedrige YI-Werte zeigen geringere Vergilbung an.

Geringe Unterschiede des Innendrucks zwischen der 1., 3. und 5. Extrusion weisen auf gute Stabilisierungseffekte des Additivs hin.

Die Resultate sind in Tabellen I und II zusammengestellt.

Tabelle I
Verarbeitungsstabilität von Polypropylen bei 260°C

| Stabilisator | Innendruck nach Extrusion (kg/cm²) | | | Yellowness Index nach Extrusion | | |
|---|---|---|---|---|---|---|
| | 1 | 3 | 5 | 1 | 3 | 5 |
| Keiner | 73,5 | 49,3 | 36,9 | 3,3 | 4,3 | 5,2 |
| 0,1% Additiv A | 82,0 | 68,2 | 59,6 | 4,5 | 7,6 | 8,8 |
| 0,1% Additiv A + 0,05% Stabilisator gemäss Beispiel 1 | 97,0 | 88,1 | 82,0 | 4,4 | 7,2 | 9,5 |

Additiv A = Pentaerithrit-tetra-[3-(3,5-di-tert.-butyl-4-hydroxyphenyl)-propionat]

Tabelle II
Verarbeitungsstabilität von Polypropylen bei 260°C

| Stabilisator | Innendruck nach Extrusion ($kg/cm_2$) 1 | 3 | 5 | Yellowness Index nach Extrusion 1 | 3 | 5 |
|---|---|---|---|---|---|---|
| Keiner | 70,0 | 54,3 | 43,8 | 6,2 | 8,0 | 9,4 |
| 0,1% Additiv A | 75,5 | 65,1 | 56,7 | 6,7 | 10,2 | 12,8 |
| 0,1% Additiv A + 0,05% Stabilistor | 92,5 | 81,5 | 73,5 | 5,0 | 6,3 | 8,4 |
| gemäss Beispiel 2 | 92,5 | 81,5 | 73,5 | 5,0 | 6,3 | 8,4 |

Additiv A = Pentaerithrit-tetra-[3-(3,5-di-tert.-butyl-4-hydroxyphenyl)-propionat]

Beispiel 10

Stabilität von hochmolekularem Polyäthylen hoher Dichte bei der Verarbeitung bei 316°C.

Unter Anwendung der allgemeinen Arbeitsweise von Beispiel 9 wird die Stabilität von hochmolekularem Polyäthylen hoher Dichte (Union Carbide 10780-64A) mit einer Nennschmelzflussgeschwindigkeit von 5,0 Gramm/10 Minuten gemessen.

Die Schmelzflussgeschwindigkeit wird gemäss ASTM-Methode 1238 Bedingung L bestimmt. Die Schmelzflussgeschwindigkeit variiert umgekehrt zum Geberdruck, und diese stellen beide ein relatives Mass für das Molekulargewicht des Polyäthylens dar. Hohe Schmelzflussgeschwindigkeiten zeigen niedrigere Molekulargewichte des Polymeren an und weisen somit darauf hin, dass möglicherweise ein Abbau des Polymeren stattfindet. Wenn demnach die Schmelzflussgeschwindigkeit nach der fünften Extrusion eine minimale Änderung gegenüber derjenigen nach der ersten Extrusion zeigt und wenn der Geberdruck nach der fünften fast so hoch ist wie nach der ersten Extrusion, so wird das Polyäthylen durch die gegebene Stabilisierungsrezeptur gut stabilisiert.

Die Ergebnisse sind aus Tabelle III ersichtlich.

Tabelle III
Stabilität von hochmolekularem Polyäthylen hoher Dichte bei der Verarbeitung bei 316°C

| Stabilisator | Innendruck nach Extrusion $kg/cm^2$ 1 | 3 | 5 | Schmelzflussgeschwindigkeit nach Extrusion Gramm/10 Minuten 1 | 3 | 5 | Vergilbungszahl Farbe nach Extrusion 1 | 3 | 5 |
|---|---|---|---|---|---|---|---|---|---|
| Keiner | 72,4 | 74,5 | 73,4 | 3,8 | 3,1 | 2,9 | −0,7 | 1,2 | 1,9 |
| 0,1% Additiv B | 74,1 | 73,5 | 72,4 | 4,4 | 4,1 | 4,0 | −1,2 | 2,5 | 3,5 |
| 0,1% Additiv B + 0,05% Stabilisator gemäss Beispiel 2 | 82,0 | 82,0 | 79,4 | 5,0 | 3,8 | 3,4 | −4,1 | −2,2 | −2,0 |
| 0,1% Additiv A | 74,5 | 73,5 | 71,4 | 4,4 | 4,1 | 4,2 | −0,8 | 5,7 | 9,5 |
| 0,1% Additiv A + 0,05% Stabilisator gemäss Beispiel 2 | 80,9 | 79,8 | 77,3 | 5,0 | 4,3 | 4,0 | −4,1 | 1,1 | 0,7 |

Additiv A = Pentaerithrit-tetra-[3-(3,5-di-tert.-butyl-4-hydroxyphenyl)-propionat
Additiv B = 3-(3,5-Di-tert.-butyl-4-hydroxyphenyl)-propionsäure-octyldecylester

Beispiel 11

Lichtstabilisierung von Polypropylen

Man verwendet einen FS/BL-Strahlungsapparat*, der aus 40 abwechselnden Röhren fluoreszierender Höhensonnen und Schwarzlampen (je 20) besteht; 0,127-mm-Filme aus Polypropylen (Profax 6801, Hercules), die 0,3 Gew.-% des zu prüfenden Stabilisators enthalten, werden auf 7,62 cm × 5,08 cm Infrarotkartenhalter mit 2,54 × 0,635 cm Fenstern aufgezogen und 5,08 cm von den Röhren im FS/BL-Apparat auf einer rotierenden Trommel montiert. Man notiert die erforderliche Zeit in Stunden, bis sich 0,5 Carbonylestinktionseinheiten, wie durch Infrarotspektroskopie bestimmt, in den Testfilmen entwickelt haben. Die Bildung von Carbonylgruppen im Polypropylen ist dem Ausmass des durch die Ultraviolettbelichtung verursachten Abbaus proportional.

Die Prüfergebnisse sind in Tabelle IV angeführt.

Beispiel 12

Stabilisierung von Polyäthylenterephthalat

Unter Stickstoff gibt man 1% der Verbindung aus Beispiel 1 als Stabilisator unter Rühren zu geschmolzenem Polyäthylenterephthalat bei 270°C. Das so erhaltene abgemischte Polymer wird mit festem Kohlendioxyd gemahlen, bis die Teilchengrösse kleiner als 100 Mikron Durchmes-

*FS/BL = Fluorescent Sunlight/Black-Light:

Tabelle IV

| Stabilisator | Stunden bis Carbonyl-extinktion 0,5 erreicht hat |
|---|---|
| Keiner | 200 |
| 0,3% Stabilisator gemäss Beispiel 1 | 570 |
| 0,5% Stabilisator gemäss Beispiel 1 + 0,2% Additiv C | 680 |
| 0,25% Stabilisator gemäss Beispiel 1 + 0,2% Additiv C + 0,25% Additiv D | 1350 |
| 0,5% Stabilisator gemäss Beispiel 2 + 0,2% Additiv C | 530 |
| 0,25% Stabilisator gemäss Beispiel 2 + 0,2% Additiv C + 0,25% Additiv D | 1350 |

Additiv C = Di-n-octadecyl-3,5-di-tert.-butyl-4-hydroxy-benzylphosphonat
Additiv D = 5-Chloro-2-(2-hydroxy-3,5-di-tert.-butylphenyl)-2H-benztriazol

ser ist. Dann bestimmt man wie folgt die Temperatur, bei welcher der Beginn der Oxydation eintritt:

Man bringt etwa 1 Milligramm des wie oben hergestellten Polyesterpulvers in die Zelle eines Perkin-Elmer-Differentialkalorimeters ein und erhitzt unter Stickstoff, bis eine Temperatur von 225°C erreicht wird. Der Stickstoffstrom wird abgestellt, und Sauerstoff wird in einer Menge von 15 ml pro Minute eingeleitet, während man mit einer Geschwindigkeit von 1 Grad pro Minute erhitzt, bis der exotherme Oxydationseffekt registriert wird. Dabei wird festgestellt, dass die Oxidationstemperatur des abgemischten Pulvers höher liegt als die des Grundpolyesterpulvers ohne den Stabilisator. Die durch den Stabilisator bedingte höhere Oxydationstemperatur zeigt deutlich die erhebliche Verbesserung der Oxydationshemmung im Polyester. Ebenfalls ist die Farbe des stabilisierten Polyesters gegenüber einem solchen ohne den Zusatzstoff verbessert.

Beispiel 13

Stabilisierung von Acrylnitril/Butadien/Styrol (ABS)

ABS-Kunstharz wird durch 7,5 Stunden Erhitzen der folgenden Rezepturen bis 80°C hergestellt:

| | | | |
|---|---|---|---|
| Kunstharz A: | Butadien | 10 | Teile |
| | Acrylnitril | 24 | |
| | Styrol | 65,8 | |
| | 2,2'-Azobisisobutyronitril | 0,1 | |
| | | 99,9 | Teile |

Kunstharz B: Dieses Kunstharz wird auf die gleiche Weise wie Kunstharz A hergestellt, ausser dass es zusätzlich 0,25% des Stabilisators enthält.

Die Oxydationstemperatur der Kunstharze wird jeweils durch Differenzscanning-Kalorimetrie (DSC) unter Anwendung folgender Arbeitsweise bestimmt:

Man bringt 10 mg in den DCS-Tiegel ein und erhitzt von Raumtemperatur mit einer Geschwindigkeit von 20°C/Minute in einem Sauerstoffstrom, der mit einer Geschwindigkeit von 250 ml/Minute fliesst. Die Temperatur, bei der man einen exothermen Effekt beobachtet, wird für jedes der Kunstharze aufgezeichnet.

Mit jeweils 0,25% eines Stabilisators aus Beispiel 1 und 2 hergestellten Proben von ABS-Kunstharzen weisen sämtliche einen exothermen Effekt bei einer höheren Temperatur auf als die entsprechenden ABS-Kunstharze, die keinen Stabilisator enthalten, was auf eine höhere thermische Stabilität der stabilisierten Kunstharze hinweist.

Beispiel 14

Stabilisierung von Polycarbonat

Ein Polycarbonat-Grundkunstharz (Lexan, General Electric) wird in einem üblichen Mischer mit 1,0% der Verbindung aus Beispiel 12 vermischt, wobei das Grundkunstharz ferner
0,1% Octadecyl-3,5-di-t-butyl-4-hydroxy-hydrozimtsäureester
enthält. Das abgemischte Kunstharz wird verpresst, geschnitzelt und in einen Standardschmelzindexapparat eingebracht. Man hält 30 Minuten bei 350°C, entfernt danach eine Probe, verpresst zu Plättchen und prüft die Farbe. Die beide Stabilisatoren enthaltende Probe hat eine viel hellere Farbe als die, welche nur
3-(3,5-Di-tert.-butyl-4-hydroxy-phenyl)-propionsäure-octadecylester
enthält.

**Patentansprüche**

1. Verbindungen der Formel I

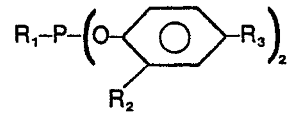

(I),

worin $R_1$ $C_1$–$C_{18}$-Alkyl, Phenyl oder mit 1 bis 3 $C_1$–$C_8$-Alkylgruppen substituiertes Phenyl bedeutet, $R_2$ $C_4$–$C_{18}$-tert.-Alkyl, Benzyl, α-Methyl-

benzyl oder α,α-Dimethylbenzyl ist, und $R_3$ Wasserstoff, $C_1$–$C_{18}$-Alkyl, Benzyl, α-Methylbenzyl oder α,α-Dimethylbenzyl bedeutet.

2. Verbindungen gemäss Anspruch 1 der Formel I, worin $R_1$ Phenyl oder mit 1 bis 3 $C_1$–$C_4$ Alkylgruppen substituiertes Phenyl bedeutet, und $R_2$ $C_4$–$C_8$-tert.-Alkyl, α-Methylbenzyl oder α,α-Dimethylbenzyl ist, und $R_3$ Wasserstoff, $C_1$–$C_8$-Alkyl, α-Methylbenzyl oder α,α-Dimethylbenzyl bedeutet.

3. Verbindungen gemäss Anspruch 1 der Formel I, worin $R_1$ Phenyl, $R_2$ $C_4$–$C_8$-tert.-Alkyl und $R_3$ $C_4$–$C_8$-Alkyl ist.

4. 0,0'-Bis-[2,4-di-tert.-butylphenyl]-phenylphosphonit oder
0,0'-Bis-[2,4-di-(1,1,3,3-tetramethyl-butyl)-phenyl]-phenylphosphonit
gemäss Anspruch 1.

5. Stabilisiertes organisches Material, dadurch gekennzeichnet, dass es als Stabilisator eine Verbindung der Formel I gemäss Anspruch 1 enthält.

6. Material nach Anspruch 5, dadurch gekennzeichnet, dass das stabilisierte organische Material ein homo- oder copolymeres Polyolefin ist.

7. Stabilisiertes organisches Material gemäss Anspruch 5, dadurch gekennzeichnet, dass es zusätzlich ein phenolisches Antioxidans enthält.

8. Stabilisiertes organisches Material gemäss Anspruch 6, dadurch gekennzeichnet, dass es als phenolisches Antioxidans
3-[3,5-Di-tert.-butyl-4-hydroxyphenyl]-propionsäureoctadecylester oder
Pentaerithrit-tetra-[3-(3,5-di-tert.-butyl-4-hydroxyphenyl)-pripionat] enthält.

9. Verfahren zur Herstellung von Verbindungen der Formel I gemäss Anspruch 1, dadurch gekennzeichnet, dass man eine Verbindung der Formel II $R_1$–P–$Cl_2$ mit einem Phenol der Formel III

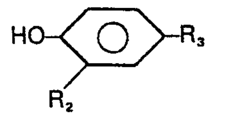 (III),

worin $R_1$, $R_2$ und $R_3$ die in Anspruch 1 genannte Bedeutung haben, in Gegenwart eines Säureacceptors umsetzt.

**Claims**

1. A compound of the formula I

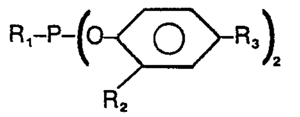 (I),

wherein $R_1$ is $C_1$–$C_{18}$-alkyl, phenyl, or phenyl substituted by 1 to 3 $C_1$–$C_8$-alkyl groups, $R_2$ is $C_4$–$C_{18}$-tert.-alkyl, benzyl, α-methylbenzyl or α,α-dimethylbenzyl, and $R_3$ is hydrogen, $C_1$–$C_{18}$-alkyl, benzyl, α-methylbenzyl or α,α-dimethylbenzyl.

2. A compound according to Claim 1, of the formula I, wherein $R_1$ is phenyl, or phenyl substituted by 1 to 3 $C_1$–$C_4$-alkyl groups, and $R_2$ is $C_4$–$C_8$-tert-alkyl, α-methylbenzyl or α,α-dimethylbenzyl, and $R_3$ is hydrogen, $C_1$–$C_8$-alkyl, α-methylbenzyl or α,α-dimethylbenzyl.

3. A compound according to Claim 1, of the formula I, wherein $R_1$ is phenyl, $R_2$ is $C_4$–$C_8$-tert-alkyl, and $R_3$ is $C_4$–$C_8$-alkyl.

4. 0,0'-Bis-[2,4-di-tert-butylphenyl]-phenylphosphonite or 0,0'-bis-[2,4-di-(1,1,3,3-tetramethylbutyl)-phenyl]-phenylphosphonite according to Claim 1.

5. Stabilised organic material which contains, as stabiliser, a compound of the formula I according to Claim 1.

6. Material according to Claim 5, which stabilised organic material is a homo- or copolymeric polyolefin.

7. Stabilised organic material according to Claim 5, which material additionally contains a phenolic antioxidant.

8. Stabilised organic material according to Claim 6, which material contains, as a phenolic antioxidant,
3-[3,5-di-tert-butyl-4-hydroxy-phenyl]-propionic acidoctadecyl ester or
pentaerithritol-tetra-[3-(3,5-di-tert-butyl-4-hydroxyphenyl)-propionate].

9. A process for producing a compound of the formula I according to Claim 1, which process comprises reacting a compound of the formula II $R_1$–P–$Cl_2$ with a phenol of the formula III

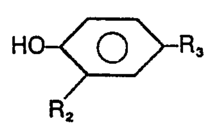 (III),

wherein $R_1$, $R_2$ and $R_3$ have the meanings defined in Claim 1, in the presence of an acid acceptor.

**Revendications**

1. Composés réponsant à la formule I

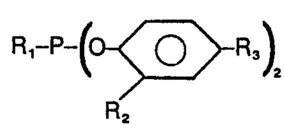 (I),

dans laquelle

$R_1$ représente un alkyle en $C_1$–$C_{18}$, un phényle ou un phényle porteur de 1 à 3 alkyles en $C_1$–$C_8$,

$R_2$ représente un tert-alkyle en $C_4$–$C_{18}$, un benzyle, un α-méthylbenzyle ou un α,α-diméthylbenzyle, et

$R_3$ représente l'hydrogène, un alkyle en $C_1$–$C_{18}$, un benzyle, un α-méthylbenzyle ou un α,α-diméthylbenzyle.

2. Composés de formule I selon la revendication 1, dans lesquels $R_1$ représente un phényle ou un phényle porteur de 1 à 3 alkyles en $C_1$–$C_4$, $R_2$ représente un tert-alkyle en $C_4$–$C_8$, un α-méthylbenzyle ou un α,α-diméthylbenzyle et $R_3$ représente l'hydrogène, un alkyle en $C_1$–$C_8$, un α-méthylbenzyle ou un α,α-diméthylbenzyle.

3. Composés de formule I selon la revendication 1, dans lesquels $R_1$ représente un phényle, $R_2$ un tert-alkyle en $C_4$–$C_8$ et $R_3$ un alkyle en $C_4$–$C_8$.

4. Phénylphosphonite d'0,0'-bis-(di-tert-butyl-2,4-phényle) ou phénylphosphonite d'0,0'-bis-[bis-(tétraméthyl-1,1,3,3-butyl)-2,4-phényle] selon la revendication 1.

5. Matière organique stabilisée en ce qu'elle contient, comme stabilisant, un composé de formule I selon la revendication 1.

6. Matière selon la revendication 5 caractérisée en ce que la matière organique stabilisée est une polyoléfine homopolymère ou copolymère.

7. Matière organique stabilisée selon la revendication 5, caractérisée en ce qu'elle contient en outre un anti-oxydant phénolique.

8. Matière organique stabilisée selon la revendication 6, caractérisée en ce qu'elle contient, comme anti-oxydant phénolique, le (di-tert-butyl-3,5-hydroxy-4-phényl)-3-propionate d'octadécyle ou le tétrakis-[(di-tert-butyl-3,5-hydroxy-4-phényl)-3-propionate] du penta-érythritol.

9. Procédé de préparation de composés de formule I selon la revendication 1, caractérisé en ce qu'on fait réagir un composé de formule II $R_1-PCl_2$ avec un phénol répondant à la formule III

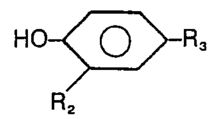

(III),

formules dans lesquelles $R_1$, $R_2$ et $R_3$ ont les significations données à la revendication 1, en présence d'un accepteur d'acides.